# EUROPÄISCHE PATENTSCHRIFT

(11) **EP 1 105 271 B1**
(45) Veröffentlichungstag und Bekanntmachung des Hinweises auf die Patenterteilung: **08.05.2002**
(21) Anmeldenummer: 99941644.9
(22) Anmeldetag: 19.08.1999
(51) Int. Cl.: B29B 17/02

(54) **VERFAHREN UND VORRICHTUNG ZUR SORTENREINEN RÜCKGEWINNUNG VON PVC AUS PVC-HALTIGEN KUNSTSTOFFABFÄLLEN**
METHOD AND DEVICE FOR RECOVERING PURE PVC FROM PLASTIC WASTE CONTAINING PVC
PROCEDE ET DISPOSITIF DE RECUPERATION DE PVC PUR A PARTIR DE DECHETS PLASTIQUES CONTENANT DU PVC

(30) Priorität: 21.08.1998 DE 19838141
(43) Veröffentlichungstag der Anmeldung: 13.06.2001
(73) Patentinhaber: P-Tec GmbH Polymertechnologie, 76139 Karlsruhe (DE)
(72) Erfinder: MÜLLER, Peter, D-76139 Karlsruhe (DE); VON HEYKING, Alexander, D-67227 Frankenthal (DE); LEITZKE, Jürgen, NL-2803 DB Gouda (NL)
(74) Vertreter: Lempert, Jost, Dipl.-Phys. Dr. rer.nat.
(86) Internationale Anmeldenummer: EP9906088
(87) Internationale Veröffentlichungsnummer: WO0010787

(56) Entgegenhaltungen:
- DE-A- 2 328 448
- DE-A- 2 900 666
- DE-A- 4 106 812
- DE-A- 4 313 007
- DE-A- 4 441 229

## Beschreibung

Die Erfindung betrifft ein Verfahren mit den Merkmalen des Oberbegriffs des Anspruchs 1 und eine Vorrichtung mit den Merkmalen des Oberbegriffs des Anspruchs 22.

Polyvinylchlorid (PVC) findet vielfache Verwendung als Isolationsmaterial von Kabeln, als Schutz- und Dekormaterial, im Rohrleitungsbau, in Kunststoffverbunden für Bodenbeläge etc. Zur Schonung der natürlichen Ressourcen und aus Umweltschutzgründen kommt der Rückgewinnung von Kunststoffen, insbesondere auch von PVC, zunehmende Bedeutung zu. Dies gilt in verstärktem Maß für Werkstoffverbunde, z.B. Metallkunststoffverbunde, wie Elektrokabel, deren weitere Komponenten gleichfalls wiederverwertbar sind.

Für die Aufarbeitung von Elektrokabeln mit PVC-Isolation sind verschiedene Verfahren bekannt (DE 33 40 273 A1, DE 19 63 148). Während sich die aus verschiedenen Metallkomponenten zusammengesetzte Schwerfraktion aufgrund der spezifischen Eigenschaften der Metalle mit physikalischen Methoden relativ leicht abtrennen läßt, ist die aus verschiedenen Kunststoffkomponenten, wie PVC, PE (Polyethylen), PP (Polypropylen) etc., zusammengesetzte Leichtfraktion aufgrund der Vielzahl unterschiedlicher Materialien mit ähnlichen physikalischen Eigenschaften auf physikalischem Weg nur sehr schwer trennbar.

Die DE 44 41 229 C2 beschreibt ein Verfahren gemäß dem Oberbegriff des Anspruchs 1 und eine Vorrichtung gemäß dem Oberbegriff des Anspruchs 22 zum kontinuierlichen Aufarbeiten von kunststoffbeschichteten Kabelresten und Kabelschrott, wobei sowohl die Metallseele der Kabel als auch das Isolationsmaterial aus PVC sortenrein zurückgewonnen werden sollen. Dieses Verfahren ist jedoch ausschließlich zur Trennung von PVC und Metall geeignet, während andere Kunststoffisolationen in einer Vorbereitungsstation manuell aussortiert werden müssen, was mit hohen Kosten verbunden ist. Praktische Versuche haben ferner gezeigt, daß die gequollenen PVC-Partikel zu einem zähen Dickschlamm agglomerieren, der eine Abscheidung der PVC-Partikel und eine Desorption und Rückgewinnung des Quellmittels mit der bekannten Anlage unmöglich macht.

Wie bereits erwähnt, fällt bei diesen Recyclingprozessen in der Leichtfraktion ein Kunststoffgemisch an, das weitere Verunreinigungen, z.B. Metallreste, Sand, Textilien und/oder Papier enthält. Da PVC selbst bei Addition von Thermostabilisatoren bei der Erwärmung auf über 180°C zur thermischen Degradation unter Abspaltung von toxischem Chlor und reizendem Chlorwasserstoff neigt, ist eine thermische Verwertung des Kunststoffgemischs oder ein Cracken zur Gewinnung eines rohölartigen Grundstoffes nicht möglich. Auch das Überführen des Kunststoffgemischs in einen plastischen Zustand und das anschließende Extrudieren, welches bei ca. 150°C erfolgen muß, ist insbesondere in Gegenwart von Restverunreinigungen an Schwermetallen, wie Kupfer, nicht möglich, da sich bei diesen Temperaturen unter dem katalytischen Einfluß der Schwermetalle in Gegenwart eines Chlordonators (PVC) polychlorierte Dioxine und Furane bilden.

Zur Aufarbeitung derartiger, aus unterschiedlichen Kunststoffen zusammengesetzter Leichtfraktionen verbleiben nach dem bisherigen Stand der Technik lediglich die Nutzung in einem sogenannten Downcycling zu Produkten minderer Werkstoffqualität oder die Deponierung.

Die DE 41 06 812 A1 beschreibt ein Verfahren zur Wiedergewinnung von gemischten Kunststoffabfällen, wobei Kunststoff-Schichtverbunde zerkleinert, die Verbundstücke in sortenreine Teilchen zerlegt und die aus verschiedenen Materialien bestehenden Teilchen hernach sortenrein getrennt werden. Während die Zerlegung der Verbundstücke in sortenreine Teilchen durch mechanische Scherkräfte erfolgen soll, ist zum sortenreinen Trennen der Teilchen vorgesehen, diese in Wasser zu dispergieren und in mehreren Hydrozyklonstufen zu separieren. Nachteilig ist insbesondere, daß im Falle von PVC enthaltenden Kunststoffabfällen dieses auch mittels zahlreicher Hydrozyklonstufen nur schlecht von anderen Kunststoffen mit ähnlicher Dichte abtrennbar ist, da PVC wie auch die meisten anderen Kunststoffe in Wasser nicht quillt und somit auch in der letzten Hydrozyklonstufe sowohl im Steig- als auch im Sinkstrom PVC abgeschieden wird.

Der DE 2 900 666 A1 ist ebenfalls ein Verfahren zum Trennen von gemischten Kunststoffabfällen entnehmbar, indem diese zerkleinert, in einer Trägerflüssigkeit (Wasser) suspendiert und mittels hintereinander geschalteter Hydrozyklone getrennt werden. Auch hier scheitert eine Abtrennung von PVC von Kunststoffen mit einer der von PVC ähnlichen Dichte.

Aus der DE 43 13 007 A1 ist ein Verfahren zur Trennung eines Kunststoffs von einem Trägermaterial bekannt, indem der in einem geeigneten Lösungsmittel quellbare Kunststoff von dem in dem Lösungsmittel nicht quellbaren Trägermaterial unter Einwirkung des Lösungsmittels getrennt wird.

Der Erfindung liegt die Aufgabe zugrunde, aus Kunststoffabfällen mit insbesondere hohem PVC-Gehalt dieses PVC sortenrein zurückzugewinnen.

Erfindungsgemäß wird diese Aufgabe bei einem Verfahren gemäß dem Oberbegriff des Anspruchs 1 dadurch gelöst, daß das geweichte Stoffgemisch unter Druck in eine Anordnung von wenigstens zwei hintereinandergeschaltenen Hydrozyklonen gefördert wird, im ersten Hydrozyklon eine Schwerfraktion aus Verunreinigungen, wie Sand- und Metallpartikel, und schweren Kunststoffpartikeln im Sinkstrom und eine Leichtfraktion aus gequollenen PVC-Partikeln sowie leichten Verunreinigungen und Kunststoffpartikeln im Steigstrom abgeschieden werden, anschließend die solchermaßen vorgereinigte Leichtfraktion klassiert und die Partikelfraktion mit den gequollenen PVC-Partikeln sowie kleineren Kunststoffpartikeln auf den zweiten Hydrozyklon aufgegeben wird, in welchem die PVC-Partikel im Sinkstrom abgeschieden werden.

In anlagentechnischer Hinsicht wird die Erfindungsaufgabe durch eine Vorrichtung mit den Merkmalen des Oberbegriffs des Anspruchs 22 gelöst, die sich dadurch auszeichnet, daß die Anordnung von Einrichtungen zum Abscheiden des gequollenen PVC wenigstens zwei hintereinandergeschaltete Hydrozyklone sowie wenigstens einen zwischen dem Oberlauf des ersten Hydrozyklons und dem zweiten Hydrozyklon angeordneten Klassierer aufweist, und daß hinter dem Quellbehälter zum Weichen des PVC und dem ersten Hydrozyklon wenigstens ein das Stoffgemisch fördernder Druckförderer angeordnet ist.

Vorteilhafte Ausgestaltungen der Erfindung sind in den abhängigen Ansprüchen gekennzeichnet, deren Merkmale in der Zeichnungsbeschreibung erläutert sind.

Die Erfindung bringt den wesentlichen Fortschritt, daß nach Durchführung der nachfolgend anhand eines Fließbildes erläuterten Verfahrensschritte das PVC sortenrein vorliegt, während das aus den weiteren Kunststoffkomponenten bestehende, vom PVC abgetrennte Gemisch auf bekannte Weise weiterverarbeitet, z.B. thermisch verwertet, extrudiert oder gegossen werden kann. Das abgetrennte PVC weist nahezu identische Eigenschaften wie Neuware auf, wobei bestimmte Werkstoffeigenschaften, wie Plastizität, Fließfähigkeit, Zugfestigkeit etc., bei dem in reiner Form äußerst spröden PVC durch die Zugabe von Weichmachern, wie Phthal- oder Terephthalsäureestern, Alkylphosphaten oder Phosphinoxiden erreicht werden können, welche sich zum Teil in dem Quell- und/oder Lösungsmittel lösen und dem von den übrigen Kunststoffen abgetrennten PVC wieder zugeführt werden. Ebenso von Vorteil ist, daß sonstige Verunreinigungen des eingesetzten Kunststoffgemischs an Metallen, Sand, Textilien oder Papier ebenfalls vom PVC abgetrennt werden, so daß dieses insbesondere keine die Weiterverarbeitung störende Metallreste mehr enthält. Wesentliches Merkmal des erfindungsgemäßen Verfahrens ist die ständige Scherbeanspruchung des Stoffgemischs und der hiervon sukzessive abgetrennten PVC-angereicherten Fraktionen bei gleichzeitiger Anwesenheit des Quellmittels, wodurch einerseits eine ständige Korngrößenreduzierung der quellenden Partikel bewirkt, andererseits ein Agglomerieren der Partikel verhindert wird.

Die erfindungsgemäße Vorrichtung ist gasdicht abgeschlossen, so daß Quellmitteldämpfe nicht in die Atmosphäre gelangen können, vielmehr annähernd vollständig zurückgewonnen und im Prozeß rezirkuliert werden. Als Quellmittel kommt bevorzugt Methylenchlorid (Dichlormethan, CH₂Cl₂) in Frage, in welchem PVC schnell aufquillt, ohne seine chemische Struktur zu verändern, während die übrigen Kunststoffkomponenten, wie Polyamide, Polyaddukte, Polyolefine (PE, PP etc.) oder PTFE in diesem Medium nicht oder nur wenig quellen. Die Verwendung von Methylenchlorid zur Abtrennung der PVC-Isolation von Elektrokabeln mit Hilfe mechanischer Agitation, wie Vibrationen, Rühr-, Schlag- oder Mahleffekten ist an sich aus der DE 23 28 448 A1 bekannt.

Nachfolgend ist die Erfindung anhand einer bevorzugten Ausführungsform unter Bezugnahme auf die Zeichnung erläutert. Dabei zeigen
- Fig. 1 bis 3: je einen Abschnitt des Fließbildes für die Aufarbeitung PVC-haltiger Abfälle, die in Anlage nebeneinander das gesamte Fließbild ergeben und
- Fig. 4: eine schematische Ansicht eines in der Anlage eingesetzten Hydrozyklons.

Das Ausgangsgut aus PVC-haltigen Kunststoffabfällen, begleitenden Verunreinigungen, wie Metallen, Sand, Textilien oder Papier, wird über Aufgabebänder 1 einem Schredder 2 zugeführt, der das Ausgangsgut mechanisch auf die erforderliche Prozeßlänge zerkleinert. Der Schredder 2 kann beispielsweise als Kegelbrecher oder als Walzenkegelmühle ausgebildet sein. Das vorzerkleinerte Stoffgemisch wird in einen Reaktor 4 gefördert, der in einem geschlossenen Aufgabebehälter 3 angeordnet ist, und gelangt nach Durchlaufen der Füllschicht 5 des Reaktors 4 in den Aufgabebehälter 3. Die Aufgabe des Reaktors 4 wird weiter unten beschrieben. Vom Aufgabebehälter 3 wird das zerkleinerte Aufgabegut mittels einer druckdichten Zellenradschleuse 6a in einen Pufferbehälter 7 gefördert und von dort mittels einer druckdichten Zellenradschleuse 6b an einen Quellbehälter 9 übergeben, in den ferner das Quellmittel, vorzugsweise Methylenchlorid, über die Leitung 8 zugeführt wird. Die Zellenradschleusen 6a, 6b dienen nicht nur zum Weitertransport des Stoffgemischs, sondern bilden zugleich einen Gasabschluß der vorgeschalteten gegenüber den nachgeschalteten Anlagenteilen. In dem Quellbehälter 9 erfolgt das Quellen des im vorzerkleinerten Stoffgemisch enthaltenen PVC.

In der gezeigten Ausführung ist der Quellbehälter 9 als Förderschnecke ausgebildet, die von einem regelbaren Motor 11 angetrieben ist, so daß die Quellzeit des PVC kontinuierlich über die Drehzahl der Förderschnecke gesteuert wird. Der Quellbehälter 9 kann z.B. auch als diskontinuierlich betriebener Rührkesselreaktor ausgebildet sein, wobei in diesem Fall vorzugsweise zwei parallele Rührkesselreaktoren vorgesehen sind.

Mittels der dem Quellbehälter 9 nachgeschalteten Zellenradschleuse 6c wird das gequollene Aufgabegut an einen Druckförderer, vorzugsweise an eine Pumpe 12, wie eine Dickstoff-, Kreiselpumpe oder dergleichen, übergeben. Die Pumpe 12 fördert das mit Methylenchlorid versetzte Stoffgemisch unter ständiger Eintragung von Scherkräften in einen Mischbehälter 13. Die Pumpe 12 dient dabei zum Aufbau eines für den Transport des Stoffgemischs erforderlichen Drucks, der je nach Ausgestaltung der weiter unten beschriebenen Hydrozyklonanordnung bei höchstens 1,5 bar, vorzugsweise höchstens 1 bar liegt. Alternativ oder zusätzlich ist als Druckförderer eine mit dem Quellmittel gespeiste Injektionseinrichtung vorgesehen, so daß das Stoffgemisch unter ständiger Eintragung von Scherkräften nicht nur druckbeaufschlagt, sondern gleichzeitig zur Erniedrigung seiner Viskosität verdünnt wird.

Der Mischbehälter 13 weist eine Einrichtung zum mechanischen Zerkleinern des gequollenen PVC in Form eines schnellaufenden Rührwerks 13a auf, das das PVC durch Scherwirkung in der vom Rührwerk 13a erzeugten Strömung mechanisch auf Korngrößen kleiner etwa 1 mm zerkleinert, während die übrigen, in Methylenchlorid nicht oder nur wenig gequollenen Kunststoffkomponenten in Form und Größe weitgehend unverändert bleiben.

Die Pumpe 42 fördert über die Leitung 10 einen regelbaren Volumenstrom an Lösungs- und/oder Quellmittel, insbesondere Methylenchlorid, in den Mischbehälter 13, so daß das Stoffgemisch eine größere Fließfähigkeit gewinnt.

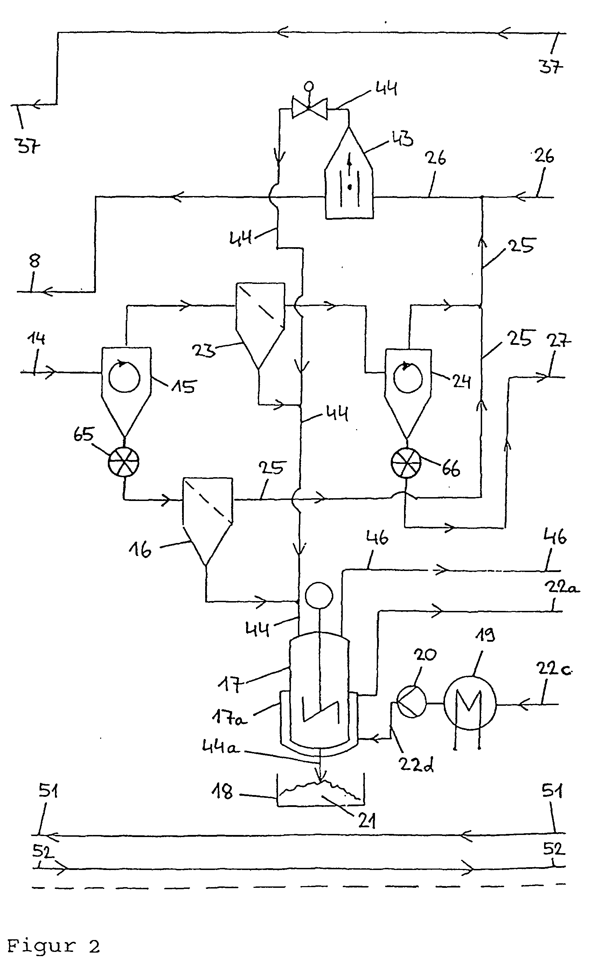

Das mit Methylenchlorid versetzte, unter Druck stehende Stoffgemisch wird über die Leitung 14 in einen ersten Hydrozyklon 15 (Fig. 2) einer erfindungsgemäßen Hydrozyklonanordnung gefördert, der so eingestellt ist, daß alle schweren und grobkörnigen Verunreinigungen, z.B. Sand- und Metallpartikel, die beispielsweise größer 50 µm sind, sowie alle nicht oder nur wenig gequollenen Kunststoffpartikel, die kleiner als etwa 1 mm sind und deren Dichte höher als die Dichte des gequollenen PVC ist, als Schwerfraktion über den Unterlauf des Hydrozyklons 15 einer Zellenschleuse 65 zugeführt werden. Durch die insbesondere drehzahlsteuerbare Zellenradschleuse 65 wird die im Sinkstrom des Hydrozyklons 15 abgeschiedene Fraktion kontinuierlich aus dem Hydrozyklon 15 ausgetragen. Die Zellenradschleuse 63 dient weiterhin zur Verhinderung eines Druckabfalls am Ablauf des Hydrozyklons, so daß einerseits ein zentraler Rückstrom im Hydrozyklon 15 weitgehend verhindert wird und die Feststoffpartikel somit in Abhängigkeit ihrer Größe und ihrer Dichte in bezüglich der sich kegelig nach unten verjüngenden Wandung des Hydrozyklons 15 äquidistanten Bereichen geschichtet werden. Durch Steuerung der Drehzahl der Zellenradschleuse 65 kann auf diese Weise nicht nur die Menge, sondern auch die Partikelgröße bzw. die Dichte der im Sinkstrom des Hydrozyklons 15 abgeschiedenen Fraktion eingestellt werden. Andererseits erfordert eine solche Hydrozyklonanordnung einen verhältnismäßig geringen Förderdruck und senkt damit die Betriebskosten der erfindungsgemäßen Vorrichtung. Um den Arbeitsdruck im Bereich des sinkstromseitigen Ablaufs des Hydrozyklons 15 nicht zu beeinträchtigen, wird die Zellenradschleuse 65 insbesondere vollständig mit dem Quellmittel geflutet.

Die im Unterlauf des Hydrozyklons 15 abgeschiedene Schwerfraktion wird mittels der Zellenradschleuse 65 einem Klassierer 16 übergeben, der beispielsweise als engmaschiges Schwingsieb ausgebildet sein kann. Die im Unterlauf des Hydrozyklons 15 abgeschiedenen Schwerfraktion wird vom restlichen Quellmittel abgetrennt und an die Leitung 44 abgegeben, während das Quellmittel selbst dem Prozeß über die Leitung 25 wieder zugeführt wird. Alternativ oder zusätzlich kann die Schwerfraktion auch flotiert oder andersartig klassiert werden.

Die gequollenen PVC-Partikel verlassen zusammen mit den nicht oder nur wenig gequollenen Kunststoffpartikeln als Leichtfraktion den Hydrozyklon 15 über den Oberlauf und gelangen in einen Klassierer 23. Ist der Klassierer 23 ebenfalls als Schwingsieb ausgebildet, so ist die Maschenweite diese Schwingsiebs 23 vorzugsweise so bemessen, daß die Partikel kleiner etwa 1 mm als Siebdurchgang anfallen, während Partikel größer etwa 1 mm, z.B. Papier oder Textilien, als Siebrückstand abgeschieden und ebenfalls der Leitung 44 zugeführt werden. Entsprechendes gilt beispielsweise für eine Flotation.

Der Siebdurchgang am Schwingsieb 23 besteht sowohl aus gequollenen PVC-Partikeln als auch schwimmfähigen Kunststoffpartikeln kleiner etwa 1 mm. Sie gelangen zusammen mit dem Quellmittel in einen zweiten Hydrozyklon 24 mit einer dem sinkstromseitigen Ablauf nachgeschalteten Zellenradschleuse 66. Der Hydrozyklon 24 wird vorzugsweise mit einer wesentlich höheren Umlaufgeschwindigkeit betrieben als der Hydrozyklon 15. Hier werden die gequollenen PVC-Partikel im Unterlauf abgeschieden und gelangen über die Zellenradschleuse 66 in die Leitung 27. Im Oberlauf des Hydrozyklons (24) werden schwimmfähige Partikel kleiner etwa 1 mm, z.B. aus Kunststoff, Papier oder Textilien zusammen mit dem Quellmittel in die Leitung 25 gefördert. Die unterschiedlichen Umlaufgeschwindigkeiten der Hydrozyklone 15, 24 lassen sich über die Druckdifferenz zwischen Einlauf und steigstromseitigem Auslauf regeln, wobei beispielsweise Ventile oder Drosselstrecken vorgesehen sein können. Zusätzlich kann zwischen den Hydrozyklonen 15 und 24 ein weiterer Druckförderer zur Erzeugung einer höheren Druckdifferenz angeordnet sein. Bei einer aus zwei Hydrozyklonen 15, 24 mit jeweils einer diesen nachgeschalteten Zellenradschleuse 65, 66 bestehenden Anordnung zur Separation von PVC reicht es in der Regel jedoch aus, lediglich einen Druckförderer 12 zu verwenden. Selbstverständlich können aber auch mehr als zwei Hydrozyklone in Serie angeordnet werden.

Die im Oberlauf des Hydrozyklons 24 abgeschiedenen schwimmfähigen Partikel gelangen zusammen mit dem Quellmittel über die Leitungen 25 und 26 in einen Abscheider 43, in dem die Partikel abgeschieden und wiederum in die Leitung 44 abgeleitet werden. Die Leitung 44 führt in einen beheizten Trockner 17, in dem adsorbiertes Quellmittel verdampft und über die Leitung 46 dem Prozeß wieder zugeführt wird. Der Trockner 17 weist beispielsweise einen Heizmantel 17a auf, der von einem in einem Kreislauf zirkulierendem Heizmedium durchflossen ist. Der Heizkreislauf besteht aus dem Wärmetauscher 19, der Umlaufpumpe 20 sowie den Leitungen 22a-d. Das getrocknete und desorbierte Produkt 21 verläßt den Trockner 17 über die Leitung 44a, in der zur aktiven Förderung eine Zellradschleuse (nicht gezeigt) angeordnet sein kann, und gelangt in die Schwerfraktion im Sammelbehälter 18. Das PVC-freie Produkt 21, das je nach Art des Ausgangsgutes Verunreinigungen wie Sand, Metall, Papier oder Textilien enthalten kann, kann auf bekannte Weise weiterverarbeitet werden.

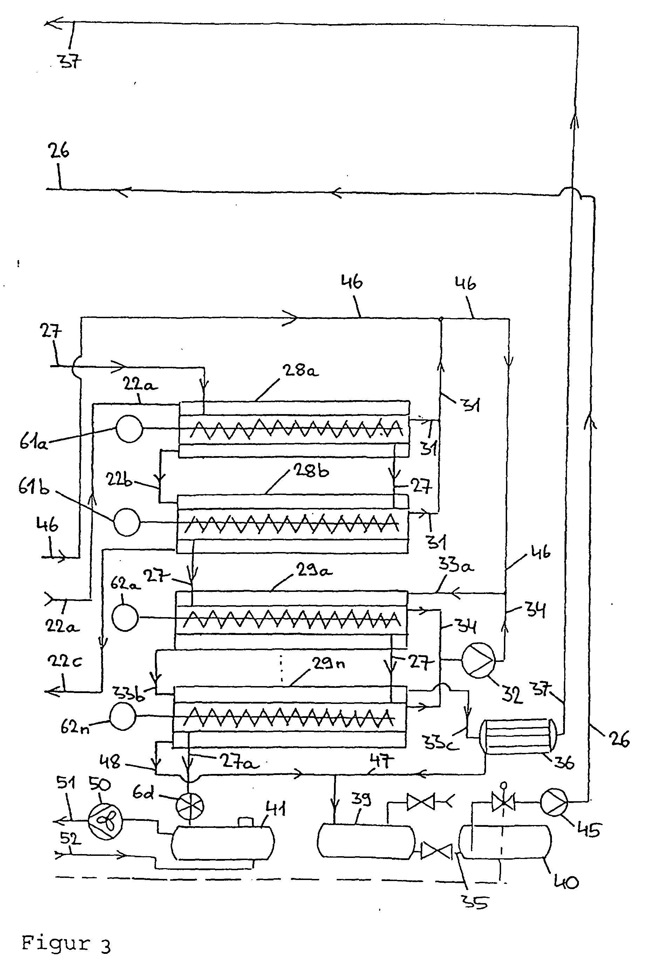

Das im Unterlauf des Hydrozyklons 24 abgeschiedene PVC, welches nach dem Quellen Slurry-Charakter hat, kann, wie Fig. 3 zeigt, über die Leitung 27 einer Anordnung von hintereinander geschalteten Trockenförderschnecken 28a, 28b bis 29a-n zugeführt werden, von denen wenigstens eine - beim gezeigten Ausführungsbeispiel zwei Trockenförderschnecken 28a und 28b - einen Heizmantel aufweist, um das Quellmittel zu verdampfen bzw. zu desorbieren. Die Trockenförderschnecken sind über die Leitungen 22a, 22b, 22c in den Heizkreislauf des Trockners 21 integriert, wobei die Wärmeübergabe mittels des Wärmetauschers 19 erfolgt. Das verdampfte bzw. desorbierte Quellmittel wird über die Leitungen 31 bzw. 46 dem Prozeß wieder zugeführt. Nach dem Austritt aus der beheizten Trockenförderschnecke 28b gelangt das immer noch Reste an Quellmittel enthaltenden PVC über die Leitung 27 in eine Kaskade von Trockenförderschnecken 29a-n, die zur vollständigen Verdampfung bzw. Desorption des Quellmittels mittels einer Vakuumpumpe 32 evakuiert werden. Die Verweilzeit des mit Quellmittel beladenen PVC in den Trockenförderschnecken 28a, 28b, 29a-n kann über deren Drehzahl variiert werden, z.B. mittels regelbarer Motoren 61a, 61b bzw. 62a-n.

Das auf diese Weise abgezogene gasförmige Quellmittel wird mit dem aus dem Mischbehälter 17 abgezogenen gasförmigen Quellmittel in der Leitung 46 zusammengeführt und über die Leitungen 33a, 33b dem Heizmantel der Trockenförderschnecken 29a-n zugeführt. Die Verdampfungstemperatur des Methylenchlorids in den Trockenförderschnecken 29a-n liegt bei dem dort herrschenden Unterdruck bei ca. 10°C. Im Heizmantel der Trockenförderschnecken 29a-n wird das Methylenchlorid kondensiert. Alternativ oder zusätzlich können auch andersartige Behälter zum Verdampfen bzw. Desorbieren des Quellmittels vorgesehen sein, z.B. Destillierkolonnen, Rektifiziereinheiten etc.

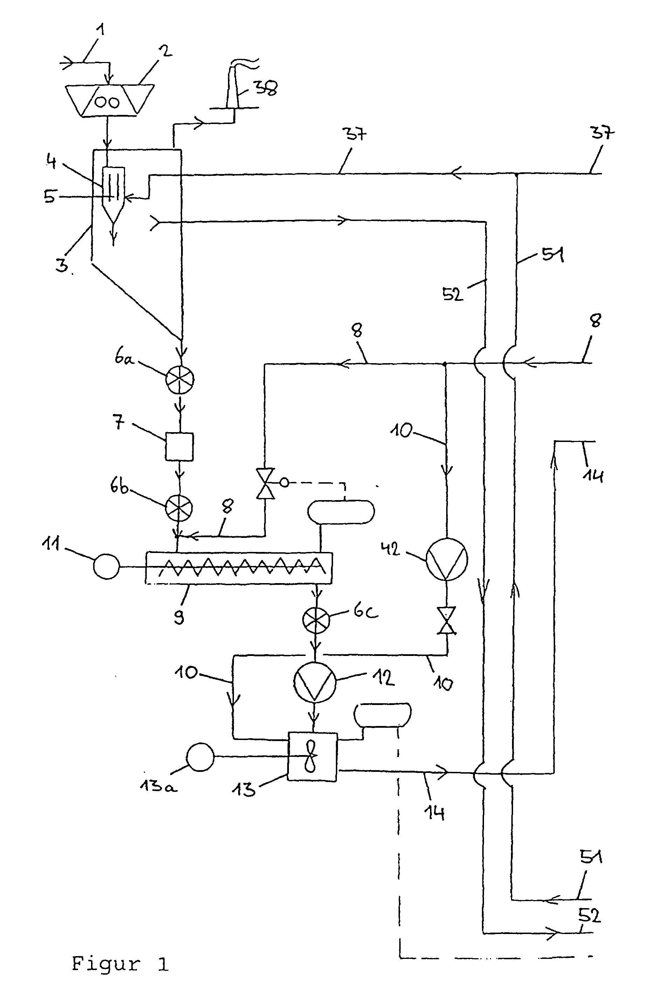

Der im Heizmantel der letzten evakuierten Trockenförderschnecke 29n noch nicht kondensierte Quellmitteldampf wird über die Leitung 33c in einen, z.B. luft- oder wassergekühlten Kondensator 36 geleitet. Das Kondensat gelangt dann über die Leitung 47 zusammen mit dem Kondensat aus dem Heizmantel der letzten evakuierten Trockenförderschnecke 29n (Leitung 48) in einen Quellmitteltank 39. Um stets für eine ausreichende Menge an Quellmittel zu sorgen, stehen beispielsweise zwei Quellmitteltanks 39, 40 zur Verfügung, die über eine Ausgleichsleitung 35 miteinander verbunden sind. Eine füllstandsgeregelte Förderpumpe 45 fördert stets die erforderliche Menge an Quellmittel über die Leitung 26 in den Abscheider 43 (Fig. 2) bzw. über die Leitung 8 in die Förderschnecke 9 (Fig. 1). Die unter Unterdruck stehenden Trockenförderschnecken 29a-n, deren Heizmantel als Kondensator für das gasförmige Quellmittel wirkt, dienen zur Wärmerückgewinnung und damit zur Reduzierung der Betriebskosten.

Die im aufgegebenen PVC enthaltenen und insbesondere während des Quellens in der Förderschnecke 9 in Methylenchlorid in Lösung gehenden Additive werden beim Verdampfen des Quellmittels in den Trockenförderschnecken 28a, 28b, 29a-n abgeschieden und dem rückgewonnenen PVC wieder zugeführt, so daß dessen Eigenschaften den Eigenschaften des aufgegebenen PVC entsprechen. Bei diesen Additiven handelt es sich hauptsächlich um Weichmacher, z.B. um hochsiedende und schwerflüchtige Komponenten, wie Phthalate oder Terephthalate, Alkylphosphate oder Phosphinoxide. Diese Komponenten verflüchtigen sich beim Abziehen des Quellmittels weder in den aktiv beheizten Trockenförderschnecken 28a, 28b, noch in den evakuierten Trockenförderschnecken 29a-n, so daß eine Rücklösung der Weichmacher im PVC erreicht und eine Anreicherung im Quellmittelkreislauf vermieden wird. Das getrocknete PVC wird vorzugsweise über eine druckdichte Zellenradschleuse 6d an einen Lagerbehälter 41 abgegeben.

Der Lagerbehälter 41 kann mittels eines Gebläses 50 intern zwangsbelüftet sein, um gegebenenfalls noch am PVC adsorbiertes Quellmittel zu desorbieren. Die Zuluft wird vorzugsweise über die Leitung 52 aus dem Aufgabebehälter 3 abgezogen und über die Leitung 51 der Leitung 37 zugeführt, die die mit desorbiertem Quellmittel beladene Abluft zusammen mit dem im Kondensator 36 nicht kondensierten Quellmitteldampf in den Aufgabebehälter 3 zurückführt. Dort wird auch die noch mit geringen Mengen an gasförmigem Quellmittel beladene Abluft aus den Leitungen 37 und 51 in den Reaktor 4 eingespeist, der unter dem Einlauf des Aufgabebehälters 3 derart angeordnet ist, daß er ständig mit frischem Ausgangsprodukt befüllt wird, das die Quellmittel-Reste in der Füllschicht 5 adsorbiert. Der Reaktor 4 kann z.B. ein Wirbelschicht- oder Festbettreaktor sein. Er kann in dem geschlossenen Aufgabebehälter 3 angeordnet oder selbst als geschlossener Aufgabebehälter ausgebildet sein. Die Abluft aus der Füllschicht 5 und dem Aufgabebehälter 3 wird über den Kamin 38 abgegeben. Sie enthält allenfalls noch geringe Spuren von Fremdgasen, die umweltrechtlich unbedeutend sind.

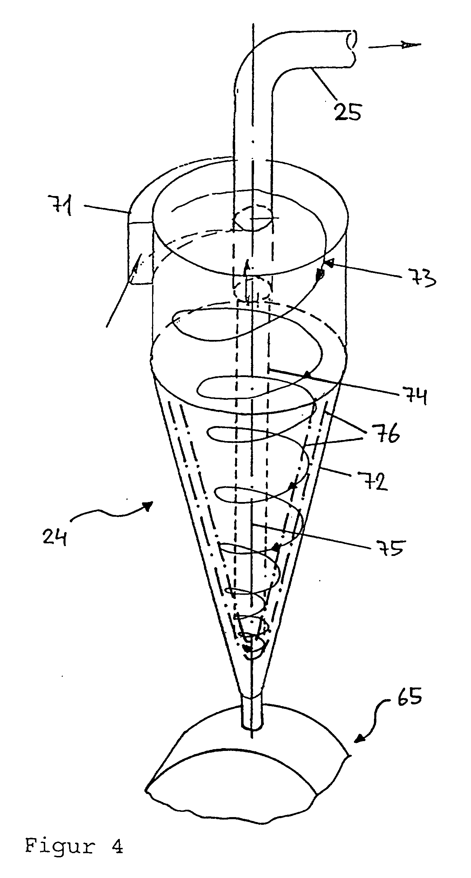

Fig. 4 zeigt beispielhaft den einen Hydrozyklon 24 der erfindungsgemäßen Hydrozyklonanordnung zur Abscheidung des PVC. Der Hydrozyklon 24 weist einen etwa tangentialen Einlauf 71 auf, über den gequollene PVC-Partikel zusammen mit schwimmfähigen Kunststoffpartikeln und Quellmittel unter Druck eingebracht werden. Durch den tangentialen Zulauf und den z.B. von der Pumpe 12 (vgl. Fig. 1) erzeugten Druck wird eine turbulente Wirbelströmung 73 mit hoher Umlaufgeschwindigkeit erzielt, die durch die sich kegelig nach unten verjüngende Wandung 72 noch erhöht wird. In dem entstehenden Wirbelkern 74 in der Längsmittelachse 75 des Hydrozyklons 24 herrscht Unterdruck. Während die PVC-Partikel durch die Zentrifugalkräfte an die Wandung 72 zentrifugiert und durch die Umlaufgeschwindigkeit der Wirbelströmung 73 auf einer geführten Spiralbahn in Richtung des sinkstromseitigen Ablaufs 27 gefördert werden, reichern sich die schwimmfähigen Kunststoffpartikel, deren Dichte kleiner als die Dichte des Quellmittels ist, im Bereich des Wirbelkerns 75 an, und werden über den als Tauchrohr ausgebildeten Ablauf 25 aus dem Hydrozyklon 24 ausgetragen. Am sinkstromseitigen Ablauf des Hydrozyklons 24 werden die PVC-Partikel über die Zellenradschleuse 65 kontinuierlich ausgetragen. Die insbesondere vollständig mit dem Quellmittel geflutete und drehzahlsteuerbare Zellenradschleuse 65 verhindert einen Druckabfall am sinkstromseitigen Ablauf, so daß es zur Ausbildung einer Schichtung 76 der Partikel in Abhängigkeit ihrer Größe und Dichte kommt und das ausgetragene Feststoffvolumen durch das entsprechende Volumen an Quellmittel ersetzt wird. Auf diese Weise wird durch Steuern der Drehzahl der Zellenradschleuse 65 die Partikelgröße und -dichte der im Sinkstrom des Hydrozyklons 24 abgeschiedenen Fraktion geregelt.

## Patentansprüche

1. Verfahren zur sortenreinen Rückgewinnung von Polyvinylchlorid (PVC) aus vorzerkleinerten, PVC-haltigen Stoffgemischen, die weitere Kunststoffabfälle sowie gegebenenfalls Verunreinigungen, wie Partikel von Sand, Metall, Papier und/ oder Textilien enthalten, wobei
a) das Stoffgemisch in einem Quellmittel für PVC geweicht wird,
b) das gequollene PVC mechanisch zerkleinert und
c) von den übrigen Kunststoffen sowie gegebenenfalls Verunreinigungen abgeschieden wird und
d) die vorgenannten und alle weiteren Verfahrensschritte, wie Trocknen od. dgl., in einem geschlossenen System durchgeführt werden,
**dadurch gekennzeichnet, daß**
das geweichte Stoffgemisch unter Druck in eine Anordnung von wenigstens zwei hintereinandergeschalteten Hydrozyklonen (15, 24) gefördert wird, im ersten Hydrozyklon (15) eine Schwerfraktion aus Verunreinigungen, wie Sand- und Metallpartikel, und schweren Kunststoffpartikeln im Sinkstrom und eine Leichtfraktion aus gequollenen PVC-Partikeln sowie leichten Verunreinigungen und Kunststoffpartikeln im Steigstrom abgeschieden werden, anschließend die solchermaßen vorgereinigte Leichtfraktion nach Partikelgröße klassiert wird und die kleinere Partikelfraktion mit den gequollenen PVC-Partikeln sowie kleineren Kunststoffpartikeln auf den zweiten Hydrozyklon (24) aufgegeben wird, in welchem die PVC-Partikel im Sinkstrom abgeschieden werden.

2. Verfahren nach Anspruch 1, **dadurch gekennzeichnet, daß** die im Sinkstrom wenigstens eines Hydrozyklons (15, 24) abgeschiedene Fraktion mittels einer Zellenradschleuse (65, 66) kontinuierlich ausgetragen wird.

3. Verfahren nach Anspruch 2, **dadurch gekennzeichnet, daß** der Austrag der im Sinkstrom des Hydrozyklons (15, 24) abgeschiedenen Fraktion durch die Drehzahl der Zellenradschleuse (65, 66) gesteuert wird.

4. Verfahren nach Anspruch 2 oder 3, **dadurch gekennzeichnet, daß** die Zellenradschleusen (65, 66) mit dem Quellmittel geflutet werden.

5. Verfahren nach einem der Ansprüche 1 bis 4, **dadurch gekennzeichnet, daß** die Schwerfraktion in dem Hydrozyklon (15, 24) auf einer geführten Spiralbahn in Richtung des sinkstromseitigen Ablaufs des Hydrozyklons (15, 24) gefördert wird.

6. Verfahren nach einem der Ansprüche 1 bis 5, **dadurch gekennzeichnet, daß** in einem Zulauf (14) zumindest des ersten Hydrozyklon (15) ein Förderdruck erzeugt wird.

7. Verfahren nach Anspruch 6, **dadurch gekennzeichnet, daß** der Förderdruck durch Druckbeaufschlagen des Zulaufs (14) zumindest des ersten Hydrozyklons (15) mit dem Quellmittel erzeugt wird.

8. Verfahren nach Anspruch 6, **dadurch gekennzeichnet, daß** der Förderdruck von wenigstens einer Pumpe 12, wie einer Dickstoffpumpe, erzeugt wird.

9. Verfahren nach einem der Ansprüche 6 bis 8, **dadurch gekennzeichnet, daß** der Förderdruck höchstens 1 bar beträgt.

10. Verfahren nach einem der Ansprüche 1 bis 9, **dadurch gekennzeichnet, daß** die wenigstens zwei Hydrozyklone (15, 24) mit verschiedenen Umlaufgeschwindigkeiten betrieben werden.

11. Verfahren nach einem der Ansprüche 1 bis 10, **dadurch gekennzeichnet, daß** die Quellzeit des PVC in dem Stoffgemisch gesteuert wird.

12. Verfahren nach einem der Ansprüche 1 bis 11, **dadurch gekennzeichnet, daß** die im PVC des Stoffgemischs enthaltenen und im Quellmittel teilweise in Lösung gehenden Additive, insbesondere Weichmacher, durch Abdampfen und/oder Desorbieren des Quellmittels infolge Diffusion beim Trocknen dem abgeschiedenen reinen PVC wieder zugeführt werden.

13. Verfahren nach einem der Ansprüche 1 bis 12, **dadurch gekennzeichnet, daß** das getrocknete, reine PVC in einem geschlossenen Sammelbehälter (41) gasdicht deponiert wird, der zur vollständigen Desorption des Quellmittels in einem geschlossenen Kreislauf belüftet wird.

14. Verfahren nach einem der Ansprüche 1 bis 13, **dadurch gekennzeichnet, daß** das mechanisch vorzerkleinerte Stoffgemisch zunächst auf einen Reaktor (4) aufgegeben wird, dessen Füllschicht (5) mit Quellmittelreste enhaltender Abluft (37, 51) aus nachgeschalteten Behandundlungsstufen (41, 36) gespeist wird, und daß das in der Abluft (37, 51) enthaltene gasförmige Quellmittel am vorzerkleinerten Stoffgemisch in der Füllschicht (5) des Reaktors (4) adsorbiert wird.

15. Verfahren nach Anspruch 14, **dadurch gekennzeichnet, daß** der Reaktor (4) als geschlossener Aufgabebehälter ausgebildet oder in einem geschlossenen Aufgabebehälter (3) angeordnet wird.

16. Verfahren nach Anspruch 15, **dadurch gekennzeichnet, daß** die quellmittelfreie Abluft aus dem Aufgabebehälter (3) einem Abgaskamin (38) zugeführt wird.

17. Verfahren nach einem der Ansprüche 1 bis 16, **dadurch gekennzeichnet, daß** das vorzerkleinerte Stoffgemisch mittels wenigstens einer gasdichten Zellenradschleuse (6a) von dem Reaktor (4) bzw. dam Aufgabebehälter (3) an wenigstens einen Quellbehälter (9) übergeben wird.

18. Verfahren nach Anspruch 17, **dadurch gekennzeichnet, daß** das vorzerkleinerte Stoffgemisch über eine aus zwei druckdichten Zellenradschleusen (6a, 6b) und einen zwischen diesen angeordneten Zwischenbehälter (7) bestehende Schleusenanordnung gasdicht in den Quellbehälter (9) gefördert wird.

19. Verfahren nach einem der Ansprüche 1 bis 18, **dadurch gekennzeichnet, daß** das Stoffgemisch hinter dem Quellbehälter (9) zum Zerkleinern des aufgequollenen PVC mechanisch beaufschlagt wird.

20. Verfahren nach einem der Ansprüche 1 bis 19, **dadurch gekennzeichnet, daß** als Quellmittel Methylenchlorid (Dichlormethan, CH₂Cl₂) verwendet wird.

21. Verfahren nach einem der Ansprüche 1 bis 20, **dadurch gekennzeichnet, daß** es kontinuierlich durchgeführt wird.

22. Vorrichtung zur Durchführung des Verfahrens gemäß einem der Ansprüche 1 bis 21, mit
a) gegebenenfalls einem Schredder (2) zum mechanischen Vorzerkleinern des Stoffgemischs,
b) wenigstens einem das Stoffgemisch und das Quellmittel aufnehmenden Quellbehälter (9) zum Weichen des PVC,
c) einer Einrichtung zum mechanischen Zerkleinern des gequollenen PVC,
d) einer Anordnung von Einrichtungen zum Abscheiden des gequollenen PVC aus dem Stoffgemisch und
e) Einrichtungen (17) zum Abtrennen des Quellmittels vom abgeschiedenen reinen PVC,
wobei alle quellmittelführenden Teile der Vorrichtung ein gasdichtes System bilden, **dadurch gekennzeichnet, daß** die Anordnung von Einrichtungen zum Abscheiden des gequollenen PVC wenigstens zwei hintereinandergeschaltete Hydrozyklone (15, 24) sowie wenigstens einen zwischen dem Oberlauf des ersten Hydrozyklons (15) und dem zweiten Hydrozyklon (24) angeordneten Klassierer (23) aufweist, und daß hinter dem Quellbehälter (9) zum Weichen des PVC und dem ersten Hydrozyklon (15) wenigstens ein das Stoffgemisch fördernder Druckförderer angeordnet ist.

23. Vorrichtung nach Anspruch 22, **dadurch gekennzeichnet, daß** am sinkstromseitigen Ablauf wenigstens eines Hydrozyklons (15, 24) eine Zellradschleuse (65, 66) zum Austragen der im Sinkstrom abgeschiedene Fraktion vorgesehen ist.

24. Vorrichtung nach Anspruch 23, **dadurch gekennzeichnet, daß** die Zellenradschleuse (65, 66) drehzahlsteuerbar ist.

25. Vorrichtung nach Anspruch 23 oder 24, **dadurch gekennzeichnet, daß** die Zellenradschleuse (65, 66) mit dem Quellmittel geflutet ist.

26. Vorrichtung nach einem der Ansprüche 22 bis 25, **dadurch gekennzeichnet, daß** hinter dem Quellbehälter (9) wenigstens ein Druckförderer mit einem Förderdruck von höchstens 1 bar angeordnet ist.

27. Vorrichtung nach Anspruch 26, **dadurch gekennzeichnet, daß** der Druckförderer eine mit dem Quellmittel gespeiste Injektionseinrichtung ist.

28. Vorrichtung nach Anspruch 26, **dadurch gekennzeichnet, daß** der Druckförderer eine Pumpe (12), wie eine Dickstoffpumpe, ist.

29. Vorrichtung nach einem der Ansprüche 22 bis 28, **dadurch gekennzeichnet, daß** die wenigstens zwei Hydrozyklone (15, 24) mit verschiedenen Umlaufgeschwindigkeiten einstellbar sind.

30. Vorrichtung nach einem der Ansprüche 22 bis 29, **dadurch gekennzeichnet, daß** Einrichtungen (28a, 28b, 29a-n) zum Verdampfen und/oder Desorbieren des Quellmittels und zur Rückführung der Additive, wie Weichmacher, in das abgeschiedene PVC vorgesehen sind.

31. Vorrichtung nach einem der Ansprüche 22 bis 30, **dadurch gekennzeichnet, daß** sie einen geschlossenen Sammelbehälter (41) zum Deponieren des abgetrennten, reinen PVC aufweist, der zur vollständigen Desorption des Quellmittels intern zwangsbelüftbar ist.

32. Vorrichtung nach einem der Ansprüche 22 bis 31, **dadurch gekennzeichnet, daß** ein Reaktor (4) zur Aufnahme des vorzerkleinerten Stoffgemischs vorgesehen ist, in dessen Füllschicht (5) Quellmittelreste enhaltende Abluft (37, 51) aus nachgeschalteten Anlagenteilen (41, 36) einleitbar ist.

33. Vorrichtung nach Anspruch 32, **dadurch gekennzeichnet, daß** der Reaktor (4) als geschlossener Aufgabebehälter ausgebildet oder in einem geschlossenen Aufgabebehälter (3) angeordnet ist.

34. Vorrichtung nach einem der Ansprüche 22 bis 33, **dadurch gekennzeichnet, daß** wenigstens eine druckdichte Zellenradschleuse (6a) zur Förderung des mechanisch vorzerkleinerten Stoffgemischs in den Quellbehälter (9) vorgesehen ist.

35. Vorrichtung nach Anspruch 34, **dadurch gekennzeichnet, daß** eine aus zwei druckdichten Zellenradschleusen (6a, 6b) und einem zwischen diesen angeordneten Pufferbehälter (7) bestehende Schleusenanordnung zum gasdichten Einspeisen des Stoffgemischs in die nachfolgenden Anlagenteile vorgesehen ist.

## Claims

1. Method for recovering pure polyvinylchloride (PVC) from substance mixtures containing previously disintegrated PVC and containing further plastic waste and possibly impurities such as particles of sand, metal, paper and/or textiles, wherein
a) the substance mixture is soaked in a swelling agent for PVC
b) the swelled PVC is mechanically disintegrated and
c) is separated from the other plastic materials and also possibly impurities; and
d) the above-mentioned and all further steps such as drying or the like are carried out in a closed system,
**characterized in that**
the soaked substance mixture is fed under pressure into an arrangement of at least two sequential hydrocyclones (15,24), wherein in the first hydrocyclone (15) a heavy fraction of impurities such as sand and metal particles and heavy plastic particles is separated in the sink flow, and a light fraction of swelled PVC particles and light impurities and plastic particles is separated in the rising flow, wherein subsequently, the thereby precleaned light fraction is sorted according to particle size, and the smaller particle fraction is fed, together with the swelled PVC particles and the smaller plastic particles, to the second hydrocyclone (24) in which the PVC particles are separated in the sink flow.

2. Method according to claim 1, **characterized in that** the fraction separated in the sink flow of at least one hydrocyclone is continuously discharged via a star feeder (65,66).

3. Method according to claim 2, **characterized in that** the discharge of the fraction separated in the sink flow of the hydrocyclone (15,24) is controlled through the rotational speed of the star feeder (65,66).

4. Method according to claim 2 or 3, **characterized in that** the star feeders (65,66) are flooded with the swelling agent.

5. Method according to any one of the claims 1 through 4, **characterized in that** the heavy fraction in the hydrocyclone (15,24) is transported on a guided spiral path towards the sink flow-sided discharge of the hydrocyclone (15,24).

6. Method according to any one of the claims 1 through 5, **characterized in that** a feed pressure is generated at one inlet (14) of at least the first hydrocyclone (15).

7. Method according to claim 6, **characterized in that** the feed pressure is generated through pressurized input of the swelling agent at the supply (14) of at least the first hydrocyclone (15).

8. Method according to claim 6, **characterized in that** the feed pressure is generated by at least one pump (12), e.g. a thick matter pump.

9. Method according to any one of the claims 6 through 8, **characterized in that** the feed pressure is not more than 1 bar.

10. Method according to any one of the claims 1 through 9, **characterized in that** the at least two hydrocyclones (15,24) are operated at different rotational speeds.

11. Method according to any one of the claims 1 through 10, **characterized in that** the swelling time of PVC in the substance mixture is controlled.

12. Method according to any one of the claims 1 through 11, **characterized in that** the additives contained in the PVC of the substance mixture which partially dissolve in the swelling agent, in particular softeners, are re-supplied to the separated pure PVC through evaporation and/or desorption of the swelling agent through diffusion during drying.

13. Method according to any one of the claims 1 through 12, **characterized in that** the dried, pure PVC is deposited in a closed collector (41) in a gas-tight manner which is ventilated in a closed cycle for complete desorption of the swelling agent.

14. Method according to any one of the claims 1 through 13, **characterized in that** the mechanically pre-disintegrated substance mixture is first fed to a reactor (4) whose filling layer (5) is supplied with exhaust air (37,51), containing swelling remnants, from subsequent treatment steps (41,36) and that the gaseous swelling agent contained in the exhaust air (37,51) is adsorbed in the pre-disintegrated substance mixture in the filling layer (5) of the reactor (4).

15. Method according to claim 14, **characterized in that** the reactor (4) is formed as closed feed container or is disposed in a closed feed container (3).

16. Method according to claim 15, **characterized in that** the swelling agent-free exhaust air is transported from the feed container (3) to an exhaust gas chimney (38).

17. Method according to any one of the claims 1 through 16, **characterized in that** the pre-disintegrated substance mixture is transferred by at least one gas-tight star feeder (6a) from the reactor (4) or feed container (3) to at least one swelling container (9).

18. Method according to claim 17, **characterized in that** the pre-disintegrated substance mixture is fed to the swelling container (9) in a gas-tight manner via a lock arrangement consisting of two pressure-tight star feeders (6a,6b) and an intermediate container (7) disposed therebetween.

19. Method according to any one of the claims 1 through 18, **characterized in that** the substance mixture is mechanically processed after the swelling container (9) to disintegrate the swelled PVC.

20. Method according to any one of the claims 1 through 19, **characterized in that** methylene chloride (dichloromethane CH₂Cl₂) is used as swelling agent.

21. Method according to any one of the claims 1 through 20, **characterized in that** it is carried out continuously.

22. Device for carrying out the method according to any one of the claims 1 through 21 comprising:
a) optionally a shredder (2) for mechanically pre-disintegrating the substance mixture;
b) at least one swelling container (9) for receiving the substance mixture and the swelling agent for soaking the PVC;
c) a device for mechanically disintegrating the swelled PVC;
d) an arrangement of devices for separating the swelled PVC from the substance mixture; and
e) devices (17) for separating the swelling agent from the separated pure PVC,
wherein all swelling agent-carrying parts of the device form a gas-tight system, **characterized in that** the arrangement of devices for separating the swelled PVC comprise at least two sequential hydrocyclones (15,24) and at least one sorter (23) disposed between the upper outlet of the first hydrocyclone (15) and the second hydrocyclone (24) and that at least one pressure transporter is disposed downstream of the swelling container (9) for soaking the PVC and of the first hydrocyclone (15), to transport the substance mixture.

23. Device according to claim 22, **characterized in that** a star feeder (65,66) is disposed at the sink flow-sided discharge of at least one hydrocyclone (15,24) for transporting the fraction separated in the sink flow.

24. Device according to claim 23, **characterized in that** the rotational speed of the star feeder (65,66) can be controlled.

25. Device according to claim 23 or 24, **characterized in that** the star feeder (65,66) is flooded with the swelling agent.

26. Device according to any one of the claims 22 through 25, **characterized in that** at least one pressure transporter is disposed after the swelling container (9), having a maximum supply pressure of 1 bar.

27. Device according to claim 26, **characterized in that** the pressure transporter is an injection device fed with the swelling agent.

28. Device according to claim 26, **characterized in that** the pressure transporter is a pump (12), e.g. a thick matter pump.

29. Device according to any one of the claims 22 through 28, **characterized in that** the at least two hydrocyclones (15,24) can be adjusted to different rotational speeds.

30. Device according to any one of the claims 22 through 29, **characterized in that** devices (28a,28b,29a-n) are provided for evaporating and/or desorbing the swelling agent and for returning the additives such as softeners into the separated PVC.

31. Device according to any one of the claims 22 through 30, **characterized in that** it comprises a closed collector (41) for depositing the separated pure PVC which can be actively internally ventilated for complete desorption of the swelling agent.

32. Device according to any one of the claims 22 through 31, **characterized in that** a reactor (4) is provided for receiving the pre-disintegrated substance mixture into whose filling layer (5) exhaust air (37,51) containing swelling agent can be introduced from downstream system components (41,36).

33. Device according to claim 32, **characterized in that** the reactor (4) is a closed feed container or is disposed in a closed feed container (3).

34. Device according to any one of the claims 22 through 33, **characterized in that** at least one pressure-tight star feeder (6a) is provided for feeding the mechanically pre-disintegrated substance mixture into the swelling container (9).

35. Device according to claim 34, **characterized in that** a lock arrangement, consisting of two pressure-tight star feeders (6a,6b) and a buffer container (7) disposed therebetween, is provided for gas-tight feeding of the substance mixture into the subsequent system components.

## Revendications

1. Procédé de récupération de chlorure de polyvinyle (PVC) à partir de mélanges de matières contenant du PVC, préalablement réduites en débris, contenant d'autres déchets plastiques ainsi que le cas échéant des impuretés telles que des particules de sable, du métal, du papier et/ou des matières textiles, dans lequel :
a) on fait tremper le mélange de matières dans un agent gonflant pour PVC,
b) on réduit mécaniquement en débris le PVC gonflé et
c) on le sépare des autres matières plastiques ainsi que le cas échéant des impuretés, et dans lequel
d) les étapes précitées et toutes les étapes ultérieures telles que le séchage ou similaire sont effectuées dans un système fermé,
**caractérisé en ce que** l'on transporte sous pression le mélange trempé de matières dans un système comprenant au moins deux hydrocyclones (15,24) montés en série, **en ce que** l'on extrait dans le flux descendant du premier hydrocyclone (15) une fraction lourde composée d'impuretés, telles que des particules de sable et de métal, et de particules lourdes de matières plastiques, et dans le flux ascendant une fraction légère composée de particules de PVC gonflées ainsi que d'impuretés et de particules de matières plastiques légères, **en ce qu'**ensuite, la fraction légère ainsi préalablement nettoyée est triée par tailles de particules et la fraction des particules les plus petites est amenée avec les particules de PVC gonflées ainsi que les plus petites particules de matières plastiques vers le deuxième hydrocyclone (24), dans lequel les particules de PVC sont extraites dans le flux descendant.

2. Procédé selon la revendication 1, **caractérisé en ce que** la fraction extraite dans le flux descendant d'au moins un hydrocyclone (15,24) est évacuée en continu au moyen d'une écluse à roue cellulaire (65,66).

3. Procédé selon la revendication 2, **caractérisé en ce que** l'évacuation de la fraction extraite dans le flux descendant de l'hydrocyclone (15,24) est commandée par la vitesse de rotation de l'écluse à roue cellulaire (65,66).

4. Procédé selon la revendication 2 ou 3, **caractérisé en ce que** l'on remplit les écluses à roue cellulaire (65,66) d'agent gonflant.

5. Procédé selon l'une quelconque des revendications 1 à 4, **caractérisé en ce que** la fraction lourde présente dans l'hydrocyclone (15,24) est transportée sur un transporteur à bande hélicoïdal guidé en direction de l'écoulement de l'hydrocyclone (15,24) situé du côté du flux descendant.

6. Procédé selon l'une quelconque des revendications 1 à 5, **caractérisé en ce que** l'on génère une pression de transport dans une conduite d'alimentation (14) au moins du premier hydrocyclone (15).

7. Procédé selon la revendication 6, **caractérisé en ce que** la pression de transport est générée par pressurisation au moyen de l'agent gonflant de la conduite d'alimentation (14) au moins du premier hydrocyclone (15)

8. Procédé selon la revendication 6, **caractérisé en ce que** la pression de transport est générée par au moins une pompe 12, telle qu'une pompe à liquides épais.

9. Procédé selon l'une quelconque des revendications 6 à 8, **caractérisé en ce que** la pression de transport est au maximum de 1 bar.

10. Procédé selon l'une quelconque des revendications 1 à 9, **caractérisé en ce que** les deux au moins hydrocyclones (15,24) sont actionnés à des vitesses de rotation différentes.

11. Procédé selon l'une quelconque des revendications 1 à 10, **caractérisé en ce que** l'on commande la durée de gonflement du PVC dans le mélange de matières.

12. Procédé selon l'une quelconque des revendications 1 à 11, **caractérisé en ce que** les additifs, en particulier des plastifiants, contenus dans le PVC présent dans le mélange de matières et se dissolvant partiellement dans l'agent gonflant sont réinjectés par évaporation et/ou désorption de l'agent gonflant dans le PVC pur extrait suite à la diffusion lors du séchage.

13. Procédé selon l'une quelconque des revendications 1 à 12, **caractérisé en ce que** le PVC pur séché est déposé de manière étanche au gaz dans un récipient de récupération (41), qui est aéré en circuit fermé en vue de réaliser la désorption complète de l'agent gonflant.

14. Procédé selon l'une quelconque des revendications 1 à 13, **caractérisé en ce que** le mélange de matières préalablement réduites mécaniquement en débris est d'abord dirigé vers un réacteur (4) dont la couche de remplissage (5) est alimentée par de l'air d'évacuation (37,51) contenant des résidus d'agent gonflant provenant d'étapes de traitement (41,36) connectées en aval, et **en ce que** l'agent gonflant sous forme gazeuse contenu dans l'air d'évacuation (37,51) est adsorbé sur le mélange de matières préalablement réduites en débris dans la couche de remplissage (5) du réacteur (4).

15. Procédé selon la revendication 14, **caractérisé en ce que** le réacteur (4) est conformé en réservoir d'alimentation fermé ou est disposé dans un réservoir d'alimentation (3) fermé.

16. Procédé selon la revendication 15, **caractérisé en ce que** l'air d'évacuation exempt d'agent gonflant est transporté du réservoir d'alimentation (3) vers une cheminée d'évacuation des gaz (38).

17. Procédé selon l'une quelconque des revendications 1 à 16, **caractérisé en ce que** le mélange de matières préalablement réduites en débris est amené du réacteur (4) ou du réservoir d'alimentation (3) vers au moins un récipient de gonflement (9) au moyen d'au moins une écluse à roue cellulaire (6a) étanche au gaz.

18. Procédé selon la revendication 17, **caractérisé en ce que** le mélange de matières préalablement réduites en débris est amené de manière étanche au gaz au récipient de gonflement (9) à travers un ensemble d'écluses constitué de deux écluses à roue cellulaire (6a, 6b) étanches et d'un réservoir intermédiaire (7) disposé entre celles-ci.

19. Procédé selon l'une quelconque des revendications 1 à 18, **caractérisé en ce que** le mélange de matières est alimenté mécaniquement derrière le récipient de gonflement (9) pour réduire le PVC gonflé en débris.

20. Procédé selon l'une quelconque des revendications 1 à 19, **caractérisé en ce que** l'on utilise comme agent gonflant du chlorure de méthylène (dichlorométhane, CH₂CL₂).

21. Procédé selon l'une quelconque des revendications 1 à 20, **caractérisé en ce qu'**il est effectué en continu.

22. Dispositif pour réaliser le procéder selon l'une quelconque des revendications 1 à 21, comprenant :
a) le cas échéant un déchiqueteur (2) pour réduire préalablement mécaniquement le mélange de matières en débris,
b) au moins un récipient de gonflement (9) destiné à recevoir le mélange de matières et l'agent gonflant pour tremper le PVC,
c) une installation pour la réduction mécanique en débris du PVC gonflé,
d) un ensemble d'installations pour extraire le PVC gonflé du mélange de matières et
e) des installations (17) pour séparer l'agent gonflant du PVC pur extrait,
dans lequel toutes les parties du dispositif transportant l'agent gonflant constituent un système étanche au gaz, **caractérisé en ce que** la disposition d'installations pour extraire le PVC gonflé présente au moins deux hydrocyclones (15,24) montés en série ainsi qu'au moins un dispositif de tri (23) disposé entre l'amont du premier hydrocyclone (15) et le deuxième hydrocyclone (24), et **en ce qu'**au moins un convoyeur à pression transportant le mélange de matières est disposé derrière le récipient de gonflement (9) destiné à tremper le PVC et le premier hydrocyclone (15).

23. Dispositif selon la revendication 22, **caractérisé en ce que** l'on prévoit au niveau de l'évacuation du côté du flux descendant d'au moins un hydrocyclone (15,24) une écluse à roue cellulaire (65,66) pour évacuer la fraction extraite dans le flux descendant.

24. Dispositif selon la revendication 23, **caractérisé en ce que** l'écluse à roue cellulaire (65,66) peut être commandée par la vitesse de rotation.

25. Dispositif selon la revendication 23 ou 24, **caractérisé en ce que** l'écluse à roue cellulaire (65,66) est remplie d'agent gonflant.

26. Dispositif selon l'une quelconque des revendications 22 à 25, **caractérisé en ce que** derrière le récipient de gonflement (9) est disposé un convoyeur à pression dont la pression de transport est au maximum de 1 bar.

27. Dispositif selon la revendication 26, **caractérisé en ce que** le convoyeur à pression est une installation à injection alimentée par l'agent gonflant.

28. Dispositif selon la revendication 26, **caractérisé en ce que** le convoyeur à pression est une pompe (12), telle une pompe à liquides épais.

29. Dispositif selon l'une quelconque des revendications 22 à 28, **caractérisé en ce que** les deux au moins hydrocyclones (15,24) peuvent être réglés à des vitesses de rotation différentes.

30. Dispositif selon l'une quelconque des revendications 22 à 29, **caractérisé en ce que** sont prévues des installations (28a, 28b, 29a-n) pour l'évaporation et/ou la désorption de l'agent gonflant et la réinjection des additifs, tels que des plastifiants, dans le PVC extrait.

31. Dispositif selon l'une quelconque des revendications 22 à 30, **caractérisé en ce qu'**il comprend un réservoir de récupération (41) fermé pour le dépôt du PVC pur extrait et à l'intérieur duquel on peut créer une circulation d'air forcée en vue de réaliser la désorption complète de l'agent gonflant.

32. Dispositif selon l'une quelconque des revendications 22 à 31, **caractérisé en ce que** l'on prévoit un réacteur (4) pour recevoir le mélange de matières préalablement réduites en débris, dans la couche de remplissage (5) duquel on peut introduire de l'air d'évacuation (37,51) contenant des résidus d'agent gonflant provenant de parties d'installation (41,36) connectées en aval.

33. Dispositif selon la revendication 32, **caractérisé en ce que** le réacteur (4) est conformé en réservoir d'alimentation fermé ou disposé dans un réservoir d'alimentation (3) fermé.

34. Dispositif selon l'une quelconque des revendications 22 à 33, **caractérisé en ce que** l'on prévoit au moins une écluse à roue cellulaire (6a) étanche pour amener le mélange de matières mécaniquement réduites au préalable en débris dans le récipient de gonflement.

35. Dispositif selon la revendication 34, **caractérisé en ce que** l'on prévoit un ensemble d'écluses pour l'alimentation en mélange de matières de manière étanche au gaz des parties d'installation suivantes, comprenant deux écluses à roue cellulaire (6a, 6b) étanches et un réservoir tampon (7) disposé entre celles-ci.
